# EUROPEAN PATENT SPECIFICATION

(11) **EP 2 300 804 B1**
(45) Date of publication and mention of the grant of the patent: **01.02.2012**
(21) Application number: 09766169.8
(22) Date of filing: 17.06.2009
(51) Int. Cl.: G01N 21/47, G01N 21/86, G01N 21/27

(54) **OPTICAL MEASURING UNIT AND METHOD FOR CARRYING OUT A REFLECTIVE MEASUREMENT**
OPTISCHE MESSEINHEIT UND VERFAHREN ZUR DURCHFÜHRUNG EINER REFLEXIONSMESSUNG
UNITE DE MESURE OPTIQUE ET PROCEDE PERMETTANT D'EFFECTUER UNE MESURE DE REFLEXION

(30) Priority: 20.06.2008 HU 0800386; 09.06.2009 HU 0900350
(43) Date of publication of application: 30.03.2011
(73) Proprietor: 77 Elektronika Müszeripari Kft., 1118 Budapest (HU)
(72) Inventor: KUNSTÁR, Károly, H-1112 Budapest (HU)
(74) Representative: Kereszty, Marcell
(86) International application number: PCT/HU2009/000051
(87) International publication number: WO 2009/153609

(56) References cited:
- EP-A2- 0 182 647
- EP-A2- 0 825 432
- US-A- 4 092 068
- US-A- 4 676 653
- US-A- 5 118 183
- US-A1- 2007 188 764
- US-B2- 7 227 640

## Description

### TECHNICAL FIELD

The invention is an optical measuring unit and a related method for carrying out reflective measurements.

### BACKGROUND ART

In the prior art, a broad use is made of spectrophotometers and other similar optical devices for measuring the optical characteristics of various objects and surfaces to be measured. These units illuminate the surface or objects to be measured, and then detect the light reflected or transmitted by the surface to be measured. This invention relates to a reflection type optical measuring unit and method, and hence we shall not deal furthermore with any transmission approaches.

The most important characteristics of light reflected during the reflective measurement described above are the wave length and the intensity. Once these characteristics are known, the colour of the surface to be measured can be determined by way of example. Identifying the colours could be important in a number of technical areas, for example in medical diagnostics. This is because reagent sheets that change their colour when exposed to various compounds and materials are frequently applied in diagnostic procedures. Such reagent sheets are very popular in determining the characteristics of body fluids, for example blood or urine.

In prior art reflection measuring apparatuses, it is an important consideration that the apparatuses should be relatively simple to produce and repair and that they should have a high degree of accuracy regardless of the circumstances. The most significant part of such measuring units is the optical measuring unit, which comprises a light source for illuminating the surface to be measured, a measuring detector for sensing the light reflected by the surface to be measured, and further optical components required for detection. Such measuring units are described e.g. in US 5 611 999, US 7 227 640 B2, US 2002/0167668 A1, US 2006/0192957 A1, and US 2007/0188764 A1. In the latter document an optical measuring unit is described, which is of relatively small size, includes bonded LED chips for the appropriate lighting, and has a light blocking optical element which surrounds the light beam generated by the light source, directs it through a light tube to the surface to be measured and has further light tubes that guide the reflected light to various measuring sensors.

Further prior art solutions are known e.g. from US 4 676 653, EP 0 182 647 A2 and EP 0 825 432 A2.

It is a disadvantage of prior art solutions, especially the latter approach that there is no compensation in case the light emitting parameters of the light source vary. Although according to the solution described in US 2007/0188764 A1 a further monitoring sensor is disclosed in addition to the normal measuring sensors, it is not used for monitoring the light of the light source, but for monitoring a light coming from a surface to be measured which emits light beams. The monitoring sensor applied in this known solution does not 'see' the light source and therefore it is not suitable for monitoring the signal of the light source. A further disadvantage of this approach is that light tubes - the surface parameters of which are difficult to stabilise - surrounding the reflected light beams lead to the measuring and monitoring sensors. It is mentioned with emphasis in the document that the light tubes must have a surface with the highest possible light reflecting ability to make sure that the efficiency of measurement is appropriate. However, the highly reflecting surfaces are extremely sensitive to dirt and vapour condensation, which greatly deteriorates in the long run the accuracy and efficiency of an optical measuring unit. In addition, the reflecting surfaces greatly increase the noise of measurement. A further disadvantage is that the measuring probe applied complicates the calculations associated with the measuring method and introduces an inaccuracy into the system at several points. The measuring sensors receiving light through the light tubes may only detect the signal coming from a narrow part of the field of vision, and therefore through the use of these units it is not possible to detect a substantial part of the light reflected by a surface.

### DISCLOSURE OF INVENTION

It is an object of the invention is to provide an optical measuring unit and to provide a method for carrying out a reflective measurement therewith, which are free of the disadvantages of prior art solutions. It is another object of the invention to provide an optical measuring unit and method, which enable efficient and low cost compensation with long term reliability concerning the eventually changing one or more light emitting parameters of the illumination. A further object of the invention is to establish a measuring sensor arrangement for compensating the eventual tilting of the illuminated surface.

The following idea led to creating the invention: if the light guiding and light blocking optical element in the optical measuring unit is used to project through a light tube the light of the light source to a surface to be measured, then it is possible to compensate the change in the light emission of the light source in a way that a monitoring sensor subjected to at least a part of the direct light of the light source is arranged in the light blocking optical element, in the inner space which is not in the path of the light tube. Contrary to prior art solutions, in the approach according to the invention, the light blocking optical element only provides the light tube necessary for illumination; by means of this light tube it becomes possible to 'concentrate' the illuminating light to an illumination light spot covering a part of the surface to be measured. The measuring detectors do not sense a light only coming through a narrow light tube, but they see almost the whole field of vision which is very beneficial for accuracy and stability.

Consequently, the invention is an optical measuring unit according to claim 1, and a method according to claim 9. Preferred embodiments are defined in the independent claims.

Hence, the inner space of the light blocking optical element of the optical measuring unit according to the invention comprises an inner shaded space extending farther than the light tube from the centreline of the light tube, and in this said shaded space a monitoring sensor subjected to a part of the direct light of the light source, and enabling the compensation of changes in the light emission of the light source is arranged. According to the invention, the expression 'direct light' means that the monitoring sensor does not (only) receive light coming via reflecting surfaces, but at least an overwhelming part of the light sensed by it comes directly from the light source. This of course does not exclude the possibility that the sensor eventually receives reflected light as well.

The disadvantages mentioned in the introduction and entailed by the application of reflecting surfaces are eliminated by the direct illumination of the monitoring sensor. According to the invention, the feature 'shaded' means that the monitoring sensor is not in the path of the light tube, i.e. it does not essentially receive either a reflected light or an environmental light coming from elsewhere, but of course it is subjected to the direct light of the light source.

The shaded space is preferably at the light source end of the inner space, and the monitoring sensor is arranged next to the light source, in a way that it senses the lateral light emission thereof. This leads to an extremely simple and low cost measuring unit, because the components can be fitted on a circuit board. In this case the light blocking optical element is fixed to the circuit board with a light tube which is perpendicular to the circuit board and the shaded space is designed as a bulging of the light tube that confines the light source and the monitoring sensor; consequently, it can be simply fitted on the circuit board.

There are preferably reflection hindering irregularities on the surface of the light tube, and preferably the light tube is designed as a threaded bore.

An especially preferred embodiment comprises at least two measuring sensors, which are arranged so as to detect the reflected light from different directions. They are preferably arranged on the two sides of the light source, symmetrically to the centreline of the light tube. In this way it becomes possible to compensate an eventual tilting of the surface to be measured. This is because in an optimal case the light tube is normal to the surface to be measured, and then even one measuring sensor could be sufficient. By the application of the two measuring sensors, and by combining their signals, the measurement can be made independent of the tilting of the surface to be measured, when the measuring sensors do not see the surface to be measured at an identical angle. When more than two sensors are used, a tilting in any direction can be compensated.

In another extremely preferred embodiment, the light blocking optical element has an external surface at least in its part between the measuring sensor and the light tube in the field of vision of the measuring sensor, where each point of the external surface is at a shorter distance from the centreline of the light tube than the spacing between the measuring sensor and the centreline of the light tube.

Thereby, the light blocking optical element is not concentrated between the measuring sensors, and does not block their fields of vision significantly and especially does not generate a light tube for them. Therefore, the disadvantages of reflecting surfaces can be eliminated.

The light source comprises at least one bonded LED chip, preferably several bonded LED chips arranged next to each other, where each of them preferably emits a different colour of light. The position of a bonded LED can be kept well under control, contrary to clear PVC encased transparent LEDs, where the location of the chip changes within a broad range. In the case of a bonded LED, there is no disturbing reflector or case, and its emitted light can be easily re-measured. It is excellent for the perpendicular illumination necessary for measurement, because indeed single spot illumination can be achieved by small size LEDs located very close to one another. In addition, the temperature dependence and aging of LEDs are also well known characteristics, which can be easily compensated.

Coloured LEDs provide illumination in a narrow wave length spectrum, and therefore illumination by several LEDs in different colours give information that can be considered to be independent about the sample, especially if the reflection of the sample depends on the wavelength. This enables the measurement of real wave length dependence, while in the case of the conventional white LED/coloured detector arrangement, the sensitivity curves of the detector can be significantly overlapping (the information is not entirely independent). In addition, the wave length of coloured LEDs has a small scatter.

The measuring unit preferably also comprises an electronic unit which is coupled to the measuring sensors and the monitoring sensor, which electronic unit has a microprocessor unit, preferably a microcontroller, which receives the analogue signals of the measuring sensors and the monitoring sensor, and converts them into digital signals.

In the method according to the invention, the surface to be measured may be preferably a reagent sheet, the colour of which is measured. By means of the LED chips, the reagent sheet is illuminated alternatingly, and the intensity of reflected light is measured by means of the measuring sensors. The discolouring of reagent sheets may vary close to the edge of the strip (or mini strip), and therefore it is advantageous if an arrangement resulting in a round illumination light spot is applied, where the illumination light spot covers up to 75 % of the reagent sheet surface.

The reflection is preferably measured with the light source switched on and off, and the interference caused by incident light is eliminated by generating the difference of the two measurements.

### BRIEF DESCRIPTION OF DRAWINGS

The preferred embodiments of the invention will be shown by way of example on the basis of drawings below, where
Fig. 1 shows a schematic view in cross section of an optical measuring unit according to the invention,
Fig. 2 shows a magnified view of one part of the cross section depicted in Fig. 1,
Fig. 3 shows the top view of a circuit board carrying the main components and applicable in an optical measuring unit according to the invention, without the light blocking optical element, and
Fig. 4 shows the three-dimensional view of a circuit board depicted in Fig. 3, with the light blocking optical element fitted thereon.

### MODES FOR CARRYING OUT THE INVENTION

The optical measuring unit according to the invention is preferably designed as a replaceable measuring probe for measuring apparatuses, and it can be used preferably for the measurement of different coloured areas of a few square millimetre size. These could be, for example, reagent pads of dry reagent urine testing strips.

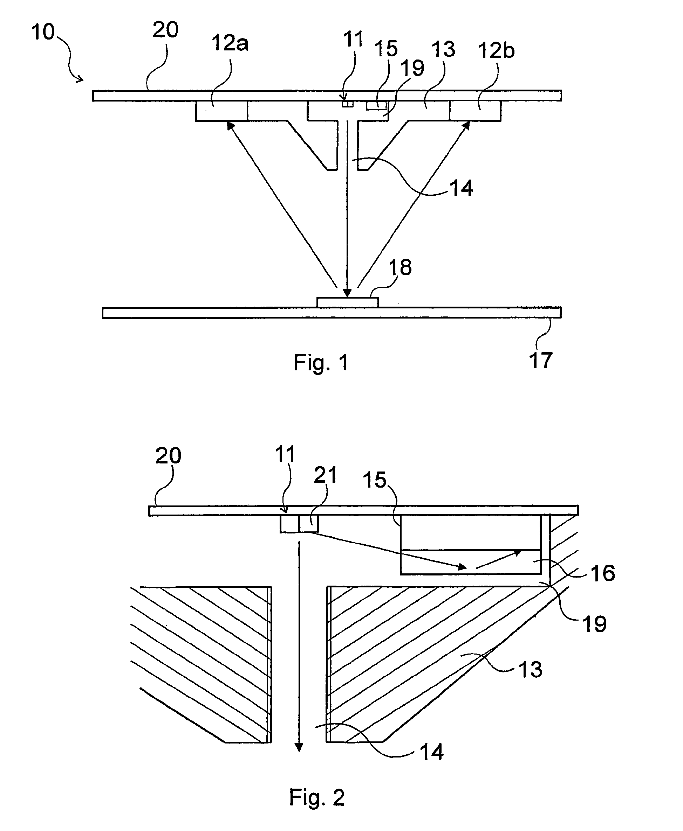

Fig. 1 shows a schematic view in cross section of the optical measuring unit 10 for reflective measurements. The optical measuring unit 10 comprises a light source 11 designed to illuminate a surface to be measured, one or more measuring sensors 12a, 12b designed to detect the light reflected by the surface to be measured, and a light blocking optical element 13.

The light emitting diodes in the light source 11 of the measuring probe are fitted on a printed circuit preferably by means of a known bonding technology. In the course of bonding, the bottom of LED chips is glued by a special conductive adhesive to the printed circuit, and the upper outlet is linked by gold wire to an appropriately designed contact. The coloured LEDs give light in a narrow wave length spectrum, and therefore illumination by several LEDs of different colours provides information that can be considered to be independent of one another about the sample, especially if the reflection of the sample depends on the wave length.

The light blocking optical element 13 is formed in a way that it separates the direct light of the light source 11 from the measuring sensors 12a, 12b using the inner space surrounding the light beam generated by the light source 11, which inner space comprises a straight centreline light tube 14 directed from the light source 11 to the surface to be measured. The inner space of the light blocking optical element 13 also comprises a shaded space 19 extending from the centreline of the light tube 14 farther than the light tube 14, and in this shaded space a monitoring sensor 15 is arranged to enable compensating the change in the light emission of light source 11, which monitoring sensor 15 is exposed to one part of the direct light coming from the light source 11. Preferably, the light blocking optical element 13 is made of a light blocking material, i.e. it does not let any light through. The change in light emission means that one or more light emitting parameters (e.g. intensity, wave length, spectrum) vary, fluctuate or drift temporarily or on a long term basis. The compensation of the measuring result can be carried out e.g. in accordance with the techniques and correction calculations generally applied in this special field.

The monitoring sensor 15 and the measuring sensors 12a, 12b are preferably photodiodes, which are low cost and steady items with simple replacement. They measure intensity (i.e. not colour) and therefore they are highly linear.

The monitoring sensor 15 (compensating, emitted light re-measuring detector) measures a given ratio of the emitted light. Therefore, the measured value can be compensated by a signal independent of the reflection coming from the sample, i.e. from the surface to be measured. In this way, the aging and temperature dependence of the light source 11 can be entirely compensated, which makes the measuring probe suitable for absolute measurement.

By the direct illumination of the monitoring sensor 15, the disadvantages mentioned in the introduction and entailed by the application of reflecting surfaces are eliminated. According to the invention, the feature 'shaded' means that the monitoring sensor is not in the path of the light tube 14, and it is in a confined space within the light blocking optical element 13, i.e. it practically does not receive any reflected light or environmental light coming from elsewhere.

In the way shown in Figs. 1 and 2, the shaded space 19 is at the light source 11 end of the inner space, and the monitoring sensor 15 is arranged next to the light source 11 so that it senses the lateral light emission thereof. The compensating sensor 15 is also sold with a transparent covered casing shown in Fig. 2, a great advantage of which is that the light entering the transparent cover 16 from the side is reflected by the surface of the lid as a boundary surface, and hence an appropriate volume of light reaches the sensor.

Preferably, there are irregularities on the surface of the light tube 14, so as to avoid the disadvantages of reflecting surfaces mentioned in the introduction. Preferably, the irregularities can be formed by designing the light tube 14 as a threaded bore.

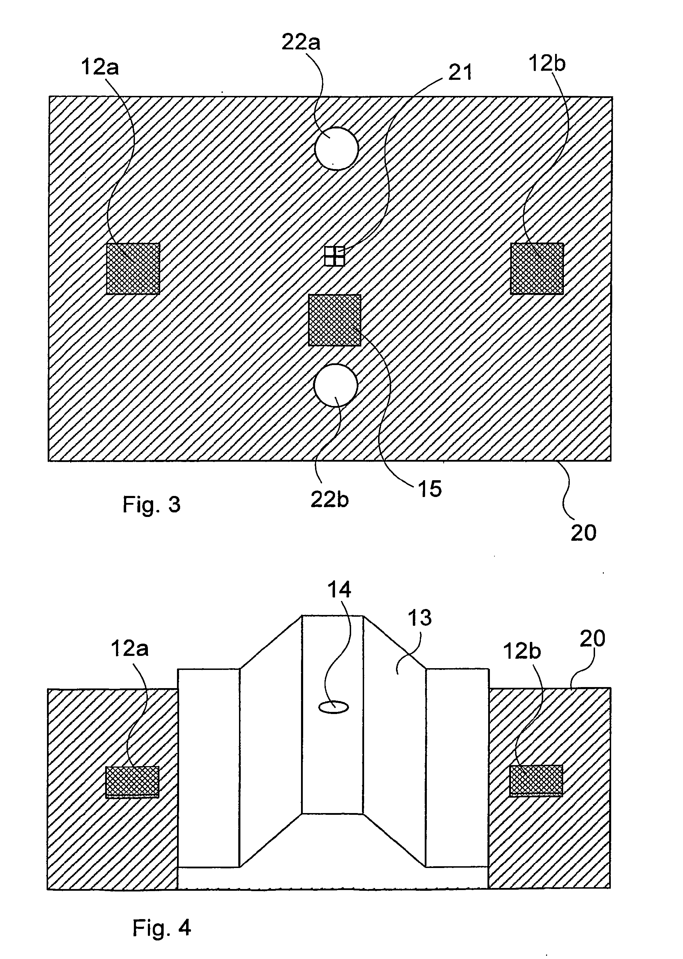

As shown in Figs. 3 and 4, the light source 11, the measuring sensors 12a, 12b and the monitoring sensor 15 are preferably arranged on the same circuit board 20, and the light blocking optical element 13 is fixed to the circuit board 20 with the light tube 14 perpendicular to the circuit board 20. In this case, the shaded space 19 is designed as a bulging of the light tube 14, comprising the light source 11 and the monitoring sensor 15. In such a way, the light blocking optical element 13 can be simply produced, for example, from plastic by injection moulding, and then simply fitted on the circuit board. The pinholes 22a, 22b in the circuit board 20 are formed to position and fix the light blocking optical element 13.

In the case of two measuring sensors 12a, 12b, the light blocking optical element 13 is preferably designed with the spine shown in Fig. 4, and the light tube 14 passes across the centre of this spine. In the case of several measuring sensors, each pair of them may be separated from each other by a spine, and they all run to one point, that is to the light tube 14. The light blocking optical element 13 may be produced of course in a different shape, for example in the form of a pipe surrounding the light tube 14.

In the preferred embodiments shown, the optical measuring unit comprises two measuring sensors 12a, 12b, which are arranged in a way that they can sense the reflected light from different directions. Indeed, the two measuring sensors 12a, 12b are arranged on the two sides of the light source 11, symmetrically to the centreline of the light tube 14. In this way it becomes possible to compensate the eventual tilting of the surface to be measured, for example when the reagent sheet to be tested is placed inaccurately into the measuring apparatus. This is because in an optimal case the light tube 14 is perpendicular to the surface to be measured in each measurement, and in this case even a single measuring sensor could be sufficient. By the application of the two measuring sensors 12a, 12b with any suitable combination - preferably by summing - of their signals, the measurement can be made independent of the eventual tilting of the surface to be measured, when the measuring sensors 12a, 12b do not see the surface to be measured at an identical angle. The optical measuring unit 10 according to the invention may comprise more than two measuring sensors, and in this case the measurement can be made independent of any direction of tilting. Hence, when the position of the surface to be measured changes after or even during each measurement, the sum of the signals of measuring sensors will be practically independent of the tilting angle of the surface.

As shown in the figures, the light blocking optical element 13 is concentrated between the measuring sensors 12a, 12b and does not block their fields of vision significantly and especially would not generate a light tube for them. At least those parts of the light blocking optical element 13 which are between each measuring sensor 12a, 12b and the light tube 14, and within the field of vision of the measuring sensors 12a, 12b, have such an external surface where each point has a shorter distance from the centreline of the light tube 14 than the spacing between the given measuring sensor 12a, 12b and the centreline of the light tube 14.

With this solution, the invention is contrary to general thinking, according to which the sensing of reflected light may only be implemented efficiently and without interferences by using a reflection light tube. According to the invention we have recognised that by making the fields of vision of measuring sensors as unlimited as possible, we can eliminate the disadvantages stemming from the further reflections of reflected light, thereby accomplishing steadier and more reliable measurements.

In the embodiment shown, the light source 11 has four bonded LED chips 21, but for more simple applications one could be sufficient. The bonded LED chips 21 arranged next to each other preferably emit different colour lights. In this way, the sensing of the colour can be provided for simply, by an intensity measurement based on various colour illuminations. The application of bonded LED chips 21 also gives the advantage in addition to the benefits mentioned in the introduction that due to their small size, they practically emit light from a single spot, which simplifies the calculations and ensures homogeneity. In the embodiment used by way of example, we apply LED chips 21 of 0.3 x 0.3 mm size, and the spacing between them is 0.2 mm. The distance between the surface to be measured and the light source 11 is preferably 8 to 12 mm and hence the LED chips 21 illuminate the surface practically from the very same point.

The optical measuring unit 10 according to the invention preferably comprises an electronic unit linked to the measuring sensors 12a, 12b and the monitoring sensor 15, and this electronic unit has a microprocessor apparatus, preferably a microcontroller, which receives the analogue signals of the measuring sensors 12a, 12b and monitoring sensor 15, converting them into digital signals. Consequently, the measuring electronics are fitted immediately next to the detectors, and hence the measured analogue signals are immediately passed on to the microcontroller, where the A/D conversion takes place. Therefore, the external noise characteristic of longer signal paths can be eliminated.

In the inventive method for carrying out a reflective measurement, the optical measuring unit 10 is used. In the course of this method, the surface to be measured is illuminated by the light source 11 and the light reflected by the surface to be measured is detected by the measuring sensors 12a, 12b. Furthermore, a part of the direct light of the light source 11 is detected by the monitoring sensor 15, which is arranged in the light blocking optical element 13, shaded from other lights. On the basis of the result of detection by the monitoring sensor 15, any eventual change in one or more light emitting parameters of the light source 11 is determined, and the measuring result is compensated in accordance with the measured change.

In the course of measurement, the reflected light is preferably detected from different directions by at least two measuring sensors 12a, 12b and the signals of the at least two measuring sensors 12a, 12b are combined, preferably summed.

The surface to be measured is preferably a reagent sheet 18 arranged on an insertable carrier 17 and shown in Fig. 1. The colour of this reagent sheet is measured and the light source 11 including the LED chips 21 and emitting various colour lights is applied, by means of which said LED chips 21 the reagent sheet 18 is illuminated alternatingly, and by means of the measuring sensors 12a, 12b the intensity of reflected light is measured.

Illumination by several light sources of different colours is applied perpendicularly to the surface to be measured. This is because if the angle of illumination is small, i.e. the illumination is very close to the perpendicular position, the intensity (position and size) of illumination only slightly depends on the distance. In such an illumination, furthermore, the surface roughness of the sample does not cause shading and a larger angular deviation from the perpendicular would only cause a smaller error in the intensity of reflected diffuse light.

The bonded LED chips 21 provide semi-spherical light, which light emission is concentrated by the light blocking optical element 13, and a round illumination light spot is created preferably of an approx. 3 mm diameter, where the illumination light spot covers up to 75 % of the surface of the reagent sheet 18. The usual size of reagent sheets used in medical diagnostics is 5 x 5 mm. Consequently, we provide a small illuminated surface and a very sensitive field of vision in the method. This has numerous advantages: on the one hand, in the case of a small illuminated surface the eventual inhomogeneity of illumination does not influence the accuracy of measurement, and on the other the eventual inhomogenity of the sensor may not cause a measuring error either because the light falling on the whole measuring sensor surface is detected. In addition, the distance dependence of the arrangement is negligible within a certain limit. It is a further benefit that the edges of reagent sheets are liable to get discoloured in a different way than inside the sheet. By means of a light spot directed to the inside of the sheet, the appropriate colours can be sensed.

In this method, preferably the reflection is measured with the light source 11 switched on and off, and by generating a difference of the two measurements, the interference caused by the incident light is compensated. This increases the measuring time somewhat, but it is not necessary to fully screen the optical system, which could be done only with difficulty in the case of replaceable measuring probes.

In the method according to the invention, preferably interference suppression may also be provided for. The impact of external disturbing light resulting from the 50Hz frequency of the mains is also screened by the measuring electronics by selecting the sampling time to be the integer multiple of the period (20 ms) of the disturbing signal.

The optical measuring unit according to the invention is preferably formed as a modularly replaceable measuring probe. The electronics of the measuring probe store the calibration data, and hence the measuring probe can be replaced as a module. The measuring probe is able to carry out the measurement and to provide measured, compensated, normalised and calibrated values. When using calibrated measuring probes, it is not necessary to recalibrate the whole apparatus when replacing the measuring probe.

The calibration is preferably performed at dedicated points of the characteristic curve. To eliminate the differences between measuring probes, subject to the wave lengths and the reflected light intensity, a 'uniformisation' is carried out at the given number of points. At the calibration points, the measuring probes practically measure an identical value, while the scatter of the values identified by interpolation between the points is minimal. The number of calibration points is determined by the accuracy requirements, the linearity of the sensors and the time necessary for calibration.

Consequently, it is shown by the description above that a measuring apparatus has been created which eliminates the factors that deteriorate measuring accuracy, can be produced at a low cost, and does not require prior art optical elements (lenses, filters and reflection light tubes). By means of the optical measuring unit according to the invention, the method according to the invention can be implemented in an extremely advantageous way.

Of course, the invention is not limited to the preferred embodiments shown in details, but further modifications and versions are possible within the scope of protection defined by the claims. The optical measuring unit may include not only two, but also one or more measuring sensors. The design of the light blocking optical element may also deviate from that shown, and it may consist of one or more pieces.

## Claims

1. An optical measuring unit (10) for carrying out a reflective measurement, the unit comprising
- a light source (11) suitable for illuminating a surface to be measured,
- a measuring sensor (12a, 12b) for detecting a light reflected by the surface to be measured, and
- a light blocking optical element (13) separating the measuring sensor (12a, 12b) from the direct light of the light source (11) and having an inner space that comprises a straight centreline light tube (14) extending from the light source (11) to wards the surface to be measured, the inner space of the light blocking optical element (13) comprises a shaded space (19) extending from the centreline of the light tube (14) farther than the light tube (14), in which a monitoring sensor (15) is arranged, said monitoring sensor (15) being subjected to a part of the direct light of the light source (11) and enabling compensation of a change of the light emission of the light source (11),
**characterised in that**
the light source (11) comprises at least one bonded LED chip (21), and the shaded space (19) is at the light source (11) end of the inner space, and that the monitoring sensor (15) is arranged next to the light source (11), and senses the lateral light emission thereof.

2. The measuring unit according to claim 1, **characterised in that** it comprises at least two measuring sensors (12a, 12b) being arranged to sense the reflected light of the light source (11) from different directions.

3. The measuring unit according to claim 2, **characterised in that** the at least two measuring sensors (12a, 12b) are arranged essentially symmetrically to the centreline of the light tube (14) on the two sides of the light source (11).

4. The measuring unit according to any of claims 1 to 3, **characterised in that** the light blocking optical element (13) has an external surface at least in its part between the measuring sensor (12a, 12b) and the light tube (14) in the field of vision of the measuring sensor (12a, 12b), where each point of the external surface is at a shorter distance from the centreline of the light tube (14) than the spacing between the measuring sensor (12a, 12b) and the centreline of the light tube (14).

5. The measuring unit according to any of claims 1 1o 4, **characterised in that** there are irregularities on the surface of the light tube (14), preferably the light tube (14) is formed as a threaded bore.

6. The measuring unit according to any of claims 1 to 5, **characterised in that** the light source (11), the measuring sensors (12a, 12b) and the monitoring sensor (15) are all arranged on the same circuit board (20), the light blocking optical element (13) is fixed to the circuit board (20) with the light tube (14) perpendicular to the circuit board (20), and the shaded space (19) is formed as a bulging of the light tube (14), said bulging confining the light source (11) and the monitoring sensor (15).

7. The measuring unit according to claim 1, **characterised in that** it comprises more than one bonded LED chips (21) arranged next to each other, each emitting preferably different colour lights.

8. The measuring unit according to any of claims 2 to 7, **characterised in that** it also comprises an electronic unit coupled to the measuring sensors (12a, 12b) and to the monitoring sensor (15), said electronic unit having a microprocessor unit, preferably a microcontroller, which receives analogue signals of the measuring sensors (12a, 12b) and of the monitoring sensor (15), and converts them to digital signals.

9. A method for carrying out a reflective measurement by an optical measuring unit (10), comprising the steps of illuminating a surface to be measured with a light source (11), and detecting the light reflected by the surface to be measured by a measuring sensor (12a, 12b) being separated from the direct light of the light source (11) by means of a light blocking optical element (13), a part of the direct light of the light source (11) is detected by a monitoring sensor (15), which is arranged in a way that it is shaded from other lights, and in case a change in the light emission of the light source (11) is detected by the monitoring sensor (15), the measuring result is compensated in accordance with the change, **characterised in that** at least one bonded LED chip (21) is used as the light source (11) and the lateral light emission of the light source (11) is detected as the part of the direct light thereof by means of the monitoring sensor (15) arranged next to the light source (11).

10. The method according to claim 9, **characterised in that** the reflected light of the light source (11) is detected from different directions by at least two measuring sensors (12a, 12b) and the signals of the at least two measuring sensors are combined.

11. The method according to claim 10, **characterised in that** the combination of the signals of the at least two measuring sensors (12a, 12b) comprises summing the signals of the measuring sensors (12a, 12b).

12. The method according to any of claims 9 to 11, **characterised in that** the surface to be measured is a reagent sheet (18), the colour of which is measured, the applied light source (11) comprises LED chips (21) emitting lights of different colors, by means of which LED chips (21) the reagent sheet (18) is illuminated alternatingly and the measuring sensors (12a, 12b) are used to measure the intensity of the reflected light.

13. The method according to claim 12, **characterised in that** an arrangement resulting in a round illumination light spot is applied, where the illumination light spot covers up to 75 % of the surface of the reagent sheet (18).

14. The method according to any of claims 9 to 13, **characterised in that** the reflection is measured when the light source (11) is switched on and off, and by generating the difference of the two measurements, the interference caused by incident light is eliminated.

## Patentansprüche

1. Eine optische Messeinheit (10) zum Ausführen von reflektorischen Messungen. Die Einheit umfasst
- eine Lichtquelle (11) geeignet zum Erleuchten von zu messenden Flächen,
- ein Messsensor (12a, 12b) zum Erfassen des zu messenden von der Oberfläche reflektierten Lichts, und
- ein lichtblockierendes optisches Element (13) zum Trennen des Messsensors (12a, 12b) vom direkten Licht der Lichtquelle (11), zudem hat das Element einen Innenraum, umfassend ein von der Lichtquelle (11) ausgehendes zur zu messende Oberfläche liegendes zentriertes grades Lichtrohr (14), der Innenraum des lichtblockierenden optischen Elements (13) umfasst einen von der zentralen Linie des Lichtrohrs (14) ausgehenden abgeschirmten Bereich (19), weiter als das Lichtrohr (14), in welchem ein Überwachungssensor (15) angebracht ist, besagter Überwachungssensor (11) wird zum Teil dem direkten Licht der Lichtquelle (11) ausgesetzt und ist fähig Kompensationen von der Lichtausstrahlung der Lichtquelle zu bewerkstelligen , **dadurch gekennzeichnet, dass** die Lichtquelle (11) zumindest einen verbundenen LED-Chip (21) umfasst, und dass der abgeschirmte Bereich (19) am Ende der Innenfläche an der Lichtquelle (11) ist, und dass der Überwachungssensor (15) neben der Lichtquelle (11) angeordnet ist und dass dieser deswegen eine seitliche Lichtemission spürt.

2. Die Messeinheit ist, gemäß Anspruch 1, **dadurch gekennzeichnet, dass** es mindestens zwei Messsensoren (12a, 12b) umfasst, welche so angeordnet sind, dass das reflektierte Licht der Lichtquelle (10) aus verschiedenen Richtungen gemessen werden kann.

3. Die Messeinheit ist, gemäß Anspruch 2, **dadurch gekennzeichnet, dass** es mindestens zwei Messsensoren (12a, 12b) umfasst, welche essentiell symmetrisch zur zentralen Linie der Lichtröhre (14) auf den beiden Seiten der Lichtquelle (11) angeordnet sind.

4. Die Messeinheit ist, gemäß Anspruch 1 bis 3, **dadurch gekennzeichnet, dass** das lichtblockierende optische Element (13) eine Außenfläche hat, die zumindest in dem Abschnitt zwischen den Messsensor (12a, 12b) und dem Lichtrohr (14) im Sensorbereich des Messsensors (12a, 12b) ist, wobei jeder Punkt der Außenfläche in einer kürzeren Distanz liegt im Vergleich zum Abstand zwischen dem Messsensor (12a, 12b) und der zentralen Linie der Lichtröhre (14).

5. Die Messeinheit ist, gemäß Anspruch 1 bis 4, **dadurch gekennzeichnet, dass** es Unregelmäßigkeiten auf der Oberfläche der Lichtröhre (14) gibt. Das Lichtrohr ist vorzugsweise wie ein eingefädelter Knochen.

6. Die Messeinheit ist, gemäß Anspruch 1 bis 5, **dadurch gekennzeichnet, dass** die Lichtquelle (11), die Messsensoren (12a, 12b) und der Überwachungssensor (15) alle auf der gleichen Leiterplatte (20) angeordnet sind, und dass das lichtblockierende optische Element (13) zur Leiterplatte (20) fixiert ist, wobei das Lichtrohr senkrecht zur Leiterplatte ist, und dass der abgeschirmte Bereich (19) wie eine Beule des Lichtrohrs (14) geformt ist, besagte Beule beschränkt die Lichtquelle (11) und den Überwachungssensor (15).

7. Die Messeinheit ist, gemäß Anspruch 1, **dadurch gekennzeichnet, dass** es mehr als einen verbundenen LED-Chip (21) umfasst, die nebeneinander angeordnet sind und jeweils vorzugweise verschiedenfarbige Lichter ausstrahlen.

8. Die Messeinheit ist, gemäß Anspruch 2 bis 7, **dadurch gekennzeichnet, dass** es auch eine elektronische Einheit umfasst, die zu den Messsensoren (12a, 12b) und zum Überwachungssensor (15) verbunden sind, besagte elektrische Einheit hat eine Mikroprozessoreinheit, vorzugsweise eine Mikrokontrolleinheit, welche analoge Signale der Messsensoren (12a, 12b) und des Überwachungssensors (15) erhält und diese in digitale Signale umwandelt.

9. Ein Verfahren zum Ausführen von reflektorischen Messungen von einer optischen Messeinheit (10), umfassend Schritte zum Erleuchten der zu messenden Oberfläche mit einer Lichtquelle (11), und Erfassung des reflektierten Lichts der zu messenden Oberfläche von einen Messsensor (12a, 12b), welcher vom direkten Licht der Lichtquelle (11) durch ein lichtblockierendes optisches Element (13) getrennt ist, ein Teil des direkten Lichts der Lichtquelle (11) wird von einem Überwachungssensor (15) erfasst, welcher so angeordnet ist, dass dieser abgeschirmt von anderem Licht ist, und falls eine Änderung in der Lichtemission der Lichtquelle (11) von dem Überwachungssensor erfasst wird, wird das gemessene Ergebnis gemäß der Änderung kompensiert, **dadurch gekennzeichnet, dass** mindestens ein verbundener LED-Chip als eine Lichtquelle (11) benutzt wird und dass die seitliche Lichtemission der Lichtquelle (11) als ein Teil des direktes Lichts erfasst wird und durch Überwachungssensoren (15) neben der Lichtquelle (11) angeordnet ist.

10. Das Verfahren ist, gemäß Anspruch 9, **dadurch gekennzeichnet, dass** das reflektierte Licht der Lichtquelle (11) von mindestens zwei Messsensoren (12a, 12b) aus verschiedenen Richtungen erfasst wird und die Signale der mindestens zwei Messsensoren kombiniert werden.

11. Das Verfahren ist, gemäß Anspruch 10, **dadurch gekennzeichnet, dass** die Kombination der Signale der mindestens zwei Messsensoren (12a, 12b) ein Sammeln der Signale der Messsensoren (12a, 12b) umfasst.

12. Das Verfahren ist, gemäß Anspruch 9 bis 11, **dadurch gekennzeichnet, dass** die zu messende Oberfläche eine Reagenzplatte ist, dessen Farben gemessen werden, die benutzte Lichtquelle (11) umfasst LED-Chips (21), welche Licht mit verschiedenen Farben ausstrahlen, wobei LED-Chips (21) die Reagenzplatte abwechselnd beleuchten und Messsensoren (12a, 12b) zum Messen der Intensität des reflektierten Lichts benutzt werden.

13. Das Verfahren ist, gemäß Anspruch 12, **dadurch gekennzeichnet, dass** eine Anordnung verwendet wird, die in einen runden Beleuchtungsstellenpunkt resultiert, wobei der Beleuchtungsstellenpunkt bis zu 75% der Oberfläche der Reagenzplatte (18) abdeckt.

14. Das Verfahren ist, gemäß Anspruch 9 bis 13, **dadurch gekennzeichnet, dass** die Reflektion gemessen wird, sobald die Lichtquelle (11) ein- und ausgeschaltet wird, und durch die Generation der Differenz dieser zwei Messungen wird die vom einfallenden Licht erzeugte Interferenz eliminiert.

## Revendications

1. Unité de mesure optique (10) destinée à effectuer une mesure de réflexion, l'unité comprenant :
- une source de lumière (11) permettant d'éclairer une surface à mesurer,
- un capteur de mesure (12a, 12b) destiné à détecter une lumière réfléchie par la surface à mesurer, et
- un élément optique occultant la lumière (13) séparant le capteur de mesure (12a, 12b) de la lumière provenant directement de la source de lumière (11) et ayant un espace interne qui comprend un tube de lumière d'axe central rectiligne (14) s'étendant de la source de lumière (11) vers la surface à mesurer, l'espace interne de l'élément optique occultant la lumière (13) comprend un espace abrité de la lumière (19) s'étendant depuis l'axe central du tube de lumière (14) au-delà du tube de lumière (14), dans lequel est disposé un capteur de suivi (15), ledit capteur de suivi (15) étant exposé à une partie de la lumière directe de la source de lumière (11) et permettant de compenser une variation de l'émission lumineuse de la source de lumière (11),
**caractérisé en ce que**
la source de lumière (11) comprend au moins une puce à LED collée (21), et l'espace abrité de la lumière (19) se situe à l'extrémité comportant la source de lumière (11) de l'espace interne, et **en ce que** le capteur de suivi (15) est disposé à proximité de la source de lumière (11) et détecte son émission lumineuse latérale.

2. Unité de mesure selon la revendication 1, **caractérisée en ce qu'**elle comprend au moins deux capteurs de mesure (12a, 12b) qui sont disposés de façon à détecter la lumière de la source de lumière (11) réfléchie dans différentes directions.

3. Unité de mesure selon la revendication 2, **caractérisée en ce que** les au moins deux capteurs de mesure (12a, 12b) sont agencés de manière pratiquement symétrique par rapport à l'axe central du tube de lumière (14) des deux côtés de la source de lumière (11).

4. Unité de mesure selon l'une quelconque des revendications 1 à 3, **caractérisée en ce que** l'élément optique occultant la lumière (13) présente une surface externe, au moins dans sa partie située entre le capteur de mesure (12a, 12b) et le tube de lumière (14), se trouvant dans le champ de vision du capteur de mesure (12a, 12b), chaque point de la surface externe étant à une plus faible distance de l'axe central du tube de lumière (14) que l'espacement entre le capteur de mesure (12a, 12b) et l'axe central du tube de lumière (14).

5. Unité de mesure selon l'une quelconque des revendications 1 à 4, **caractérisée en ce qu'**il existe des irrégularités à la surface du tube de lumière (14), et **en ce que** le tube de lumière (14) est de préférence formé sous la forme d'un alésage fileté.

6. Unité de mesure selon l'une quelconque des revendications 1 à 5, **caractérisée en ce que** la source de lumière (11), les capteurs de mesure (12a, 12b) et le capteur de suivi (15) sont tous disposés sur la même carte de circuit (20), **en ce que** l'élément optique occultant la lumière (13) est fixé à la carte de circuit (20), le tube de lumière (14) étant perpendiculaire à la carte de circuit (20), et **en ce que** l'espace abrité de la lumière (19) est formé sous la forme d'un renflement du tube de lumière (14), ledit renflement confinant la source de lumière (11) et le capteur de suivi (15).

7. Unité de mesure selon la revendication 1, **caractérisée en ce qu'**elle comprend plusieurs puces à LED collées (21) disposées l'une à côté de l'autre, émettant chacune préférentiellement des lumières de couleurs différentes.

8. Unité de mesure selon l'une quelconque des revendications 2 à 7, **caractérisée en ce qu'**elle comprend également une unité électronique reliée aux capteurs de mesure (12a, 12b) et au capteur de suivi (15), ladite unité électronique comportant une unité à microprocesseur, préférentiellement, un microcontrôleur, qui reçoit des signaux analogiques des capteurs de mesure (12a, 12b) et du capteur de suivi (15), et les convertit en signaux numériques.

9. Procédé de mise en oeuvre d'une mesure de réflexion à l'aide d'une unité de mesure optique (10), comprenant les étapes consistant à éclairer une surface à mesurer à l'aide d'une source de lumière (11), et à détecter la lumière réfléchie par la surface à mesurer à l'aide d'un capteur de mesure (12, 12b) qui est séparé de la lumière directe de la source de lumière (11) au moyen d'un élément optique occultant la lumière (13), une partie de la lumière directe de la source de lumière (11) étant détectée par un capteur de suivi (15) qui est disposé de telle manière qu'il soit abrité d'autres lumières et que, dans le cas où une variation de l'émission de lumière de la source de lumière (11) est détectée par le capteur de suivi (15), le résultat de mesure soit compensé conformément à cette variation, **caractérisé en ce que**
au moins une puce à LED collée (21) est utilisée en tant que source de lumière (11) et **en ce que** l'émission de lumière latérale de la source de lumière (11) est détectée en tant que partie de sa lumière directe au moyen du capteur de suivi (15) disposé à proximité de la source de lumière (11).

10. Procédé selon la revendication 9, **caractérisé en ce que** la lumière réfléchie de la source de lumière (11) est détectée en provenance de différentes directions par au moins deux capteurs de mesure (12a, 12b) et **en ce que** les signaux des au moins deux capteurs de mesure sont combinés.

11. Procédé selon la revendication 10, **caractérisé en ce que** la combinaison des signaux des au moins deux capteurs de mesure (12a, 12b) comprend la sommation des signaux des capteurs de mesure (12a, 12b).

12. Procédé selon l'une quelconque des revendications 9 à 11, **caractérisé en ce que** la surface à mesurer est une feuille de réactif (18) dont la couleur est mesurée, **en ce que** la source de lumière (11) appliquée comprend des puces à LED (21) émettant des lumières de couleurs différentes, puces à LED (21) au moyen desquelles la feuille de réactif (18) est éclairée de manière alternée, et **en ce que** les capteurs de mesure (12a, 12b) sont utilisés pour mesurer l'intensité de la lumière réfléchie.

13. Procédé selon la revendication 12, **caractérisé en ce qu'**on applique un agencement conduisant à un point lumineux d'éclairement rond, le point lumineux d'éclairement couvrant jusqu'à 75 % de la surface de la feuille de réactif (18).

14. Procédé selon l'une quelconque des revendications 9 à 13, **caractérisé en ce qu'**on mesure la réflexion lorsque la source de lumière (11) est activée et désactivée, et **en ce qu'**en générant la différence entre les deux mesures, on élimine l'interférence due à la lumière incidente.
